# EUROPEAN PATENT SPECIFICATION

(11) **EP 1 609 834 B1**
(45) Date of publication and mention of the grant of the patent: **02.05.2007**
(21) Application number: 04014710.0
(22) Date of filing: 23.06.2004
(51) Int. Cl.: C09J 201/00, B01F 7/00

(54) **Process to generate water based adhesives and their use**
Verfahren zur Herstellung auf Wasser basierender Klebstoffe und deren Verwendung
Méthode de préparation de compositions adhésives aqueuses et leur utilisation

(43) Date of publication of application: 28.12.2005
(73) Proprietor: National Starch and Chemical Investment Holding Corporation, New Castle, Delaware 19720 (US)
(72) Inventor: Magnin, Christophe, 69009 Lyon (FR); Burdett, Susan Moira, Woking Surrey GU22 0HX (GB); Duckworth, David, Wilpshire Blackburn Lancashire BB1 9HZ (GB); Flücken, Rainer Christian Uwe, 47551 Bedburg-Hau (DE); Koelliker, Robert, 6208 Oberkirch (CH); Spriggs, Emma, High Wycombe, Buckinghamshire HP13 5YY (GB)
(74) Representative: Hagemann, Heinrich

(56) References cited:
- DE-A- 4 442 989
- GB-A- 1 468 792
- PATENT ABSTRACTS OF JAPAN vol. 0165, no. 37 (C-1003), 6 November 1992 (1992-11-06) & JP 4 202580 A (KANEBOU ENU ESU SHII KK), 23 July 1992 (1992-07-23)

## Description

The invention relates to a process of reconstituting powders to generate water based adhesives and their uses.

Liquid solvent-based adhesives, aqueous liquid adhesives and hot melt adhesives are conventionally used to bond one substrate to a second substrate. Each of these adhesives, however, has a number of disadvantages associated with their use. Solvent-based adhesives pose environmental and health hazards and are difficult to handle, as are hot melt adhesives. Aqueous liquid adhesives provide for environmentally friendly adhesives over alternative solvent based adhesives, and increased safety and handling versus hot melt adhesives. However, there are a number of disadvantages of water based adhesives, such as relatively long drying, set or cure times and the water contained within them non-limiting tends to swell surface and / or substrate material. Additionally, they have limited storage time and/ or a significant level of biocide to avoid bacteria growth, transport limitations due to the water which has to be shipped as well, and they require transport and storage in temperature controlled conditions due to limited freeze thaw stability.

To avoid some of the above issues, a number of different approaches have been proposed. US-A 2003/0026976 describes synthetic resin based adhesives, which are foamed to introduce less water into the construction, to reduce the temperature requirements as well as to increase line speeds. Additionally, a substantial cost saving can be achieved. US-B 6,280,514 describes a process to make a foamed polysaccharide aqueous-based adhesive using a foam generator and US-B 6,280,515 describes a process for producing a stable, consistent aqueous polysaccharide-based foamed adhesive, using a polysaccharide modified with an alkyl succinic anhydride. However the issues regarding limited storage time and/ or biocide levels as well as the described disadvantages regarding transportation are not solved.

An apparatus to introduce foam into a water based adhesive is described in DE-C 199 05 229, using pressurized air. It is designed to have a working pressure in the second storage vessel for the foamed adhesive of 2.8 to 3.2 bar, thus sustaining pressures of e.g. up to 6 bar. The whole design is fairly complex and due to the pressure resistant layout also costly.

There is another technology addressing the disadvantages of aqueous adhesives of limited storage and transport by using powder adhesives. The general advantages of powders are well known, such that no biocides are required for shelf lives of 6 months or longer, no water needs to be shipped around and the products have an excellent freeze thaw stability. However, they are primarily used as additives to cement containing, dry mortar systems, which are mixed with water on the building site. There is a very limited mentioning of using water re-dispersible powder adhesives in non-building applications.

EP-A 794 986 discloses a pulverulent adhesive based on cold-water-soluble polysaccharides. To avoid clump formation during the mixing process, at least one coarse-particle substance with a mean particle size of 0.5 to 5 mm is added, which dissolves in cold water without any increase in viscosity. This coarse particles substance dissolve neutrally in cold water in 5 to 15 minutes at 20°C and consists in particular of alkali metal and alkaline earth metal salts and preferably of sugars and urea. The polysaccharides are starch, starch derivatives and cellulose derivatives as typically used in the production of pastes and glues. The process to generate the adhesives is defined by mixing the components mechanically until they are homogeneous. It is a batch process and therefore not suitable for an efficient industrial application. Additionally, the added coarse particles to avoid clump formation will have an impact on the application properties.

EP-A 796 301 discloses a wood glue powder, which is easily dispersible in water having improved bond strength, thermal stability and rapid setting properties. It is prepared by adding to the dispersion before the drying step one or more fully hydrolysed vinyl alcohol homopolymers or vinyl alcohol copolymers having a degree of hydrolysis of from 96 to 100 mol% and a Höppler viscosity of from 2 to 15 mPa·s. This powder is for wood applications only and therefore very limited in its use. Re-dispersible powders, such as this wood glue powder, are also expensive due to the additional drying step which is required to remove the water. Additionally, the described viscosities of 10'000 to 50'000 mPa·s are not suitable for many applications types. Although it is mentioned that the pre-formulated wood glue powder need only to be stirred together with water prior to application, details are not given, even it is clear that it is not easy to get homogeneously mixed such high viscous material by mixing powders with water efficiently, particularly for industrial use.

GB 146'992 discloses a process to gelatinize a single starch component, based on the four different reaction variables amount of starch, amount of water, the temperature and the reaction time. The two possible processes are a batch process, which requires vigorous agitation and heating times of 15 to 30 minutes, and a continuous mixing process using a stationary mixing tube, which can be equipped with a jacket for direct steam heating. The average detention time of the slurry is 265 seconds. However, only very low viscous materials of below 1000 cP can be made. No information is given to prepare efficiently water-based materials such as synthetic polymers which are much more difficult to re-disperse, due to high viscosities, potential clump formation such as film formation upon aggregation, or requiring high energy input.

PAJ-abstract of JP-A-4'202'580 describes a two step process using first a very specific mixing devise with plural pins to mix water-soluble adhesive powders with a liquid component. In order to obtain the water based adhesive, the resultant mixture was transferred in a second step into a dissolving tank, mixed with water and dissolved to afford the objective. Such a two step process is complicated and it is anticipated that when using water-insoluble polymers the pins can cause large water insoluble aggregates, which make the process very unsuitable for such materials.

It is now the object of the present invention to propose a process to generate water based adhesives, which:
- are based on raw materials which have long storage times, e.g. longer than 6 months, are freeze thaw stable, environmentally friendly, e.g. having low VOC levels and are preferably plasticiser free and have a low or even zero biocide level to encompass the future regulations, and
- can permanently deliver products at low to high viscosities at a constant quality and short mixing times with an easy-to-use equipment at a positive or neutral cost impact, and
- can produce with one raw material a multiple of different adhesive grades to reduce significantly the complexity of logistics.

It was surprisingly found that this object can be solved by mixing a re-dispersible powder adhesive and water, optionally together with other components, such that the final water based adhesive contains a re-dispersed powder adhesive in an amount of about 0.5% to 80% by weight and has a Brookfield viscosity (23°C/20 RPM) from about 10 to 250'000 mPas, wherein
- the mixing is carried out as a micro-batch or a continuous process with a volume of the mixing chamber of about 0.001 to 200 litres and with a mixing time of about 0.01 to 500 seconds, and
- the ratio of the diameter of at least one mixer blade to the diameter of the mixing chamber is about 0.50 to 0.99.

The process according to the invention re-disperses the powder adhesives in a high shear re-dispersing unit within seconds or a few minutes. The re-dispersion process is a micro-batch or continuous process. Two or more inlets are attached to the re-dispersing unit, where the powder adhesive as well as the water feed can be controlled either gravimetrically or volumetrically, and an outlet, which is most typically at the bottom of the mixing vessel. The powder adhesive, supplied typically in bags (typically 10 to 30 kg), big bags (typically 400 to 1200 kg) or truck delivery into silos, can be fed first into a powder reservoir or directly into the mixing chamber. The powder feed stream can be brought into the reservoir and/ or the mixing chamber by either gravity, gas pressure, vacuum suction, screw pump and/ or any other suitable means.

The feed rate of the powder adhesive depends on the amount of adhesive consumed, the solids to be obtained for the final adhesive as well as on the size of the mixing chamber. The mixing chamber operates best at filling volumes preferably between about 10 and 90 %, more preferably between about 25 and 75% and in particular between about 40 and 60%. The ratio of the feed rates of the powder adhesive and the water depends very much on the type of raw material, the amount of gas entrained and the achieved viscosities, and ranges preferably from about 0.005 to 4, more preferably from about 0.01 to 2.5 and in particular from about 0.02 to 2. At a solids content of 50%, the averaged powder feed rate depends on the volume of the re-dispersing chamber and speed of filling, but varies preferably from about 0.01 kg/min to 500 kg/min, more preferably from about 0.1 to 50 kg/min and in particular from about 0.5 to 25 kg/min.

The micro-batch mixing unit is a mixer with some degree of automation, which re-disperses compared to the batch process less material in shorter cycles. It operates in at least 3 steps, which can be consecutive and/ or in parallel: First it loads the raw materials such as the powder adhesive, the water and optionally other components within preferably about 0.1 to 60 seconds, in particular between about 1 and 40 seconds. The raw materials can be added either together and/ or in sequence. Secondly, it mixes the additions strongly, enabling the powder adhesive to re-disperse to the extent required, which can be back to the primary particle size, or to smaller aggregates. The time to re-disperse the powder adhesive (mixing time) is preferably from about 0.01 to 500 seconds, more preferably from about 0.1 to 250 seconds and in particular from about 1 to 150 seconds. It can be one or more agitators of one or several types. A non-exclusive list includes paddles, dissolver discs, rotor - stator systems such as rotating dissolver disks with steel fingers, or any modified version. The mixing speed ranges preferably from about 10 rpm to 20'000 rpm, more preferably from about 100 to 10'000 rpm and depends very much on the agitator system the unit is equipped with. Optionally, after the re-dispersion is achieved, it can be further mixed to entrain more air. This time span is variable and can go up to 15 minutes or more and depends very much on the applicants needs. Thirdly, the obtained water based adhesive is being discharged and transported directly to the application machine. In many cases, however, it is preferably brought into a storage tank, from which the application machine can be fed directly. The storage tank can be at ambient or elevated pressure of up to about 10 bar, preferably up to about 3 bar, to allow good control of the adhesive outlet to the application unit.

One preferred embodiment is a mixing unit with a rotating dissolver disk with steel fingers, operating at a speed of about 100 to 2000 rpm, requiring typical re-dispersion times of about 2 to 200 sec. Another preferred embodiment is a mixing unit equipped with one dissolver disc and two paddles, operating at a speed of about 200 to 5000 rpm, requiring typical re-dispersion times of about 5 to 400 seconds. In both cases the mixing can be further extended e.g. for air entraining purposes, to a total of 1000 seconds or more. The cycle time of this micro-batch process is preferably about 2 to 500 seconds.

Alternatively, the powder adhesive can be re-dispersed continuously. This can be achieved with the same mixing unit as for the micro-batch process, but with continuous feed-in of raw materials and a permanent discharge of the obtained water based adhesive. In this case, adjusting the inlets and outlets relative to the volume of the mixing chamber can vary the mixing time. Therefore, with a given volume of the mixing chamber, the mixing time is increased by decreasing the inlet and outlet flow rates. Another possibility to re-disperse the powder adhesive continuously is to use a tubular type mixing chamber such as screw kneaders and their variants, which is suitable for higher viscosities, such as from about 1000 to 250'000 mPas, preferably from about 5000 to 100'000 mPas, and/ or static tubular mixers which are more suitable for about 20 to 3000 mPas.

The volume of the mixing chamber, independent of if it has been designed for a micro-batch or a continuous process, can be up to 200 litres or larger and depends primarily on the amount of adhesive used per time unit. However, the preferred size is from about 0.001 to 200 litres, and preferably from about 0.01 to 100 litres, most preferably from about 0.05 to 50 litres, and in particular from about 0.1 to 25 litres. Lower volumes are in particular preferred for low volume, high value applications such as medical and/ or electronic applications. The mixing chamber can be open or preferably closed to avoid contamination as well as dust formation. If the regulations require clean water to make adhesives, the water can be filtered before its use in order to get the products compliant with regulations such as FDA, BFR and/ or DTV.

The operating temperature preferably varies from about 0°C to 150°C or higher, but is more preferably ambient, about 15 to 50°C, depending on the temperature of the tap water. In some cases, however, it is of great benefit to use elevated temperatures. If the viscosity of the re-dispersed adhesive at ambient temperatures is very high, about 100'000 mPas or higher, it is most typical much lower at elevated temperatures such as above about 60°C, more typically at about 80 to 100°C. Optionally, it can be pressurized and/ or temperature controlled. At such temperatures, re-dispersing as well as transporting high viscous adhesives is much easier. Upon applying it onto the substrate, it will cool down, thus giving the required viscosity. Another reason to work at elevated temperatures is to cook native and/ or modified starch at the same time as it is redispersed. Alternatively, the starch can be cooked before the starch/ water equipment, such as a jet cooker, can be attached. When such high temperatures are used, steam can be used instead of water. However, when the working temperature is ambient, preferably tap water is used. Since the prepared adhesive can heat up considerably upon re-dispersion due to the high shear forces applied, the mixing vessel can be cooled to avoid too much heating up of the freshly prepared adhesive.

It is important that enough energy is applied to ensure fast and effective mixing and redispersion. If the energy is too low, insufficient re-dispersion occurs, clumps are built up and hardly break up or simply too much time is required, making the process inefficient. A measure to how much energy is applied when using a rotating mixer can best be calculated as the ratio of the energy of mixing to the volume of the mixing chamber at 600 rpm, 50% filling volume and a Brookfield viscosity (23°C/20 RPM) after mixing of 2500 mPas. Preferably it ranges from about 0.05 to 20 Ampere/ litre, more preferably from about 0.10 to 10 Ampere/ litre and in particular from about 0.15 to 5 Ampere/ litre.

In order to get the required strong mixing in mixing chambers with rotating mixers, the ratio of the diameter of at least one mixer blade to the diameter of the mixing chamber is preferably from about 0.50 to 0.99, more preferably from about 0.60 to 0.98, most preferably from about 0.70 to 0.97 and in particular from about 0.80 to 0.95.

The mixing vessel can be emptied from the re-dispersion by pump, gravity or pressurized gas, if the viscosity is low enough. At higher viscosities, above about 5000 mPas, it is preferred to pump the re-dispersed adhesive out by a pump capable of handling higher viscous materials, such as mono pumps, piston pumps or cogwheel pumps. It can be either continuous or at the end of a re-dispersing cycle.

Besides the inlets for the powder adhesive and the water, other additions can be made as well. They can be fed into the re-dispersing unit together with the powder adhesive and/ or before or afterwards, such as before the mixing starts, during or after the mixing procedure. Alternatively, they can be added also to the outlet line, the storage tank or to the line going to the application unit. Preferred is the addition into the re-dispersing unit to ensure proper mixing and distribution. These further additives can be solid, liquid and/ or gaseous and multiple additions can be made in parallel and/ or in sequence. They can be added through a standard feed line, which is typically for solids and liquids, sprayed onto the to-be re-dispersed mixture, such as defoamers, or it also can be added into the mixture through a bottom or side-fed inlet for e.g. gases such as air to aerate the re-dispersion.

The lines to feed in the materials are equipped with flow meters to dose exactly the water, powder and other optional additives. Alternatively, the mixing chamber can be on load cells to meter in the raw materials gravimetrically. Optionally, the volumetric and gravimetric methods can also be combined.

Ideally, the re-dispersing unit is fitted with a computerized control unit, with which one can easily adjust the input parameters such as amounts of powder and water added, mixing speed and time and, if required pressure and temperature. Optionally, online or offline instruments such as NIR, particle sizers, any viscosity measurement device or other control instruments can be attached to the control unit to adjust the parameters of the re-dispersion, such as viscosity, particle size distribution, solids and/ or density.

The synthetic and natural powder adhesives form upon re-dispersion in water a molecular dispersion (true solution), colloidal dispersion (particle diameters of about 1 to 100 nm) or a dispersion with particle sizes of about 100 nm to 10 µm or larger. However, the formed re-dispersion is stable for at least 2 hours and does not settle within this time frame. The particle size of the re-dispersion can be as low as the one from the raw material before drying, but it can comprise also larger particles, e.g. agglomerates. By varying the re-dispersion conditions, e.g. the stirrer type used and the shear force applied over a given time, the particle size of the re-dispersion can be optimised according to the application needs

Such water re-dispersible powder adhesives can be synthetic or natural products. Synthetic powder adhesives can be dried solution polymers such as polyvinyl alcohol, functionalised polyvinyl alcohol, polyvinyl pyrrolidone and/ or polyacrylates. They also can be dried polymers made by suspension-, emulsion- and/ or micro emulsion polymerisation or emulsified bulk polymers. They can be one single type of product or a mixture of several products, including one or several emulsion polymers combined with one or several synthetic solution polymers and/ or natural polymers. The homo- and/ or copolymers can be made, but not exclusively, from e.g. vinyl esters of C₁- to C₂₀-carboxylic acids such as vinyl acetate, vinyl propionate, vinyl butyrate, vinyl pivalate, vinyl 2-ethylhexanoate, vinyl laurate and vinyl versatates with up to 12 carbon atoms, such as VeoVa 9, VeoVa 10 and VeoVa 11, ethylene, vinylchloride, C₁- to C₂₀- esters of acrylic or methacrylic acid, such as methyl (meth)acrylate, ethyl (meth)acrylate, butyl (meth)acrylate , 2-ethylhexyl (meth)acrylate, hydroxyethyl (meth)acrylate, derivatives of unsaturated dicarboxylic acids, such as C₁- to C₂₀- esters of itaconic acid, diisopropyl fumarate, dimethyl, methyl t-butyl, di-n-butyl, di-t-butyl and diethyl esters of maleic acid and fumaric acid, maleic anhydride, styrene and styrene derivatives as well as butadiene. Preferred monomers are vinyl acetate, ethylene, vinyl versatates, butyl acrylate, methyl methacrylate and combinations thereof.

The polymer may contain also functional monomers from about 0.01 to 20%, preferably from about 0.05 to 10% by weight, based on the overall weight of comonomer mixture. Non-limiting examples include acrylic acid and methacrylic acid, unsaturated dicarboxylic acids, such as itaconic acid, maleic acid, fumaric acid, as well as their mono substituted derivatives, vinyl sulfonate, 2-acrylamido-2-methyl propanesulfonic acid and their salts, N-[3-(dimethylamino)-propyl]-methacrylamide (DMAPMA), N-[3-(dimethylamino)-ethyl]-methacrylamide, N-[3-(dimethyl ammonium)-propyl]-methacrylamide chloride, N,N-[3-(chloro-2-hydroxypropyl)-3-dimethyl ammonium propyl]-methacrylamide chloride, aminopropyl vinylether, dimethylaminopropyl vinylether, N-vinyl formamide, N-vinyl pyrrolidone, N-vinyl caprolactam, N-alkyl (meth)acrylamides such as t-octyl acrylamide, cyanoethylacrylates, diacetoneacrylamide, N-vinyl acetamide Glycidyl methacrylate, allyl glycidyl ether, acrylamide, methacrylamide, acrylonitrile, N-methylol acrylamide, N-methylol methacrylamide, allyl N-methylolcarbamate, as well as alkyl ethers such as isobutoxy ether, and esters of N-methylol acrylamide, N-methylol methacrylamide, allyl N-methylolcarbamate, Si-containing monomers such as vinyl-trialkoxy silane, γ-methacryloxypropyltrialkoxy silane, whereas the alkoxy group can be e.g. methoxy, ethoxy, isopropoxy, ethoxyethylene, methoxypropyleneglycolether or ethoxypropyleneglycolether, polyethylenically unsaturated comonomers such as divinyl adipate, diallyl maleate, allyl methacrylate, triallyl cyanurate, diallyl phthalate, divinyl benzene. Preferred functional monomers are Glycidyl methacrylate, N-methylol acrylamide, N-methylol methacrylamide and vinyltriethoxy silane.

Preferred polymers made are vinyl acetate homopolymers, copolymers of ethylene and vinyl acetate with ethylene contents of preferably about 1 to 60%, more preferably between about 5 and 25%, and/ or Acrylates. The particles can be stabilized by fully or partially hydrolysed polyvinyl alcohol with degree of hydrolysis of preferably about 70 to 100, more preferably between about 80 and 98 and their derivatives, polyvinyl pyrrolidone with molecular weights of preferably about 2000 and 400'000, cationic or anionic stabilization systems obtained by monomers such water soluble polymers obtained from poly(meth)acrylic acid, polyvinylsulfonic acid as well as stabilizing systems as described e.g. in EP-A 1098916, EP-A 1109838, Melaminformaldehydesulfonates, Naphthalinformaldehydesolufonates, Styrene maleicacid- and vinylethermaleic acid copolymers, cold-water soluble polysaccharides such as cellulose, starch (amylose and amylopectine), guar, dextrines, which can, but must not be modified by e.g. carboxymethyl, carboxyethyl, hydroxyethyl, hydroxypropyl, methyl, ethyl, propyl and/ or longer chain alkyl groups, alginates, peptides and/ or proteins such as gelatine, casein and/ or soja proteins. Preferred are partially or fully hydrolyzed polyvinyl alcohol, dextrines and/ or hydroxyalkyl cellulose.

Natural powder adhesives can be modified or unmodified polysaccharides such as cellulose, starch (amylose and amylopectine), guar, dextrines, which can, but must not be modified, by e.g. carboxymethyl, carboxyethyl, hydroxyethyl, hydroxypropyl, methyl, ethyl, propyl, or C₄- to C₂₀- alkyl groups, C₁- to C₂₀- alkyl succinimides, alginates, peptides and/ or proteins such as gelatine, casein and/ or soya proteins. Preferred are starch ethers, hydroxyethyl and/ or carboxymethyl cellulose, dextrines, gelatine and/ or casein.

The synthetic and natural products are dried to get water re-dispersible powder adhesives. Non-limiting examples of drying the products are spray drying, spray cooling and freeze drying, drum drying, fluidized bed drying, flash drying, spray granulation, spray agglomeration or through product flocculation followed by filtration and subsequent drying.

Other components can be added to the adhesive either as a single additive or as a combination of various components. They can be either in liquid or in solid state and can, but must not, be water-soluble. Non-limiting examples include nonionic, anionic, cationic or amphoteric surfactant or mixtures thereof. Suitable anionic surfactants include, alkyl sulfonates, alkylaryl sulfonates, alkyl sulfates, sulfates of hydroxylalkanols, alkyl and alkylaryl disulfonates, sulfonated fatty acids, sulfates and phosphates of polyethoxylated alkanols and alkylphenols, and esters of sulfosuccinic acid. Suitable cationic surfactants include, alkyl quaternary ammonium salts, and alkyl quaternary phosphonium salts. Suitable non-ionic surfactants include the addition products of 5 to 50 moles of ethylene oxide adducted to straight-chain and branched-chain alkanols having 6 to 22 carbon atoms, alkylphenols, higher fatty acids, higher fatty acid amines, primary or secondary higher alkyl amines, and block copolymers of propylene oxide with ethylene oxide, and mixtures thereof. When used, the surface-active agent will preferably be added in amounts up to about 20% by weight, more preferably from about 0.05 to 10% by weight, and in particular at from about 0.2 to 5% by weight of the water based adhesive. Further other components can be wetting agents, adhesion promoters, foam generators, defoamers, rheology modifiers, plasticizer, coalescing agents, dyes, pigments, fragrances, tackifiers, waxes, UV indicators, humectants, pH-adjusters and/ or buffers, hardeners such as acidic metal salts such as AlCl₃, FeCl₃, Cr(NO₃)₃, crosslinkers such as polyisocyanates, boric acid and/ or their salts or formaldehyde-urea resins and formaldehyde-phenol resins, fillers and anti-caking agents such as carbonates, clays, silicates, hydrophobic and hydrophilic silica, pyrogenic or precipitated silicic acid, microsilica, kaolin, talc, magnesium hydrosilicate, light spar, polysaccharides such as starches, mica, nut shell flours, and wood flour. Preferred fillers are calcium carbonates, clays and silica. While use of biocides and other types of preservatives can be avoided due to the powdered state of the adhesive formulation, such additives may be added if desired, for instance to prolong the shelf life after re-dispersion. Preservatives for use herein include those conventionally used in aqueous adhesives such as benzoates, amides and fluorides such as sodium fluoride. Also included are the hydroxybenzoic acid esters such as p-hydroxybenzoic acid methyl ester or p-hydroxybenzoic butyl ester. If a preservative will be included, it is added preferably in amounts from about 0.05% to 0.2% by weight. Other components commonly used in the art can be added as well. They can be added to the powder adhesive either before, during or after the drying step, or just before, during or after the re-dispersion of the powder adhesive. Preferred mode is for liquid additives either before the converting step of the adhesive to powder, or into the mixing unit during the water based adhesive formation. Preferred mode for solid additives is either addition to the powder adhesive or during the mixing process as an additional feed. Total amounts of such additives range preferably from about 0 to 500 parts per 100 parts of organic polymeric adhesive component. More preferred amounts are from about 0 to 200 parts, and in particular from about 1 to 100 parts per 100 parts of organic polymeric adhesive component .

If desired, the water-based adhesive may be applied in the foamed state, independently if it is based on natural products, synthetic solution polymers, particle forming polymerization products and/ or mixtures thereof. The adhesive composition of the invention may be foamed by either introducing actively a gas or a gas mixture into the adhesive by means known in the art such as, but not limited to, chemical and/or mechanical means, such as mechanical stirring or agitation incorporating a gas or a gas mixture during the re-dispersion step into the adhesive. The preferred gas is nitrogen and the preferred gas mixture is air. The preferred method of addition is during the mixing stage. The water based adhesive may or may not contain an air entraining and/or an air stabilization agent to stabilize the entrained gas. Such an air-entraining agent may be added to the powder adhesive either before, during or after the drying step. Alternatively, it may be added to the water used for re-dispersion or directly during or after the re-dispersion step. It is also possible that another compound being present in the adhesive, such as a solution polymer, facilitates the air incorporation and stabilization. The density of such foamed adhesives preferably ranges from about 1.200 to 0.010 g/cm³, more preferably from about 1.150 to 0.10 g/cm³, most preferably from about 1.10 to 0.40 g/cm³, and in particular from about 1.05 to 0.50 g/cm³.

The solids content of water based adhesives based on the inventive process is best expressed by the amount of non-volatiles or solids relative to the total amount of volatile or liquid and non-volatiles or solid portions, independent on the amount of air incorporated in the system. It preferably varies from about 0.5 to 80% solids based on the total amount of powder adhesive and water, more preferably from about 1 to 70%, in particular from about 2 to 60%. It primarily depends on the solution characteristics in water of the particular polymers. Typically, non-ionic high molecular weight cellulose ethers are more typically applied at lower solids of from about 0.5% to 10%, starches and casein typically from about 30 to 60%, dextrines typically from about 20 to 80%, more typically from about 25 to 75%, and non-ionic synthetic solution polymers such polyvinyl alcohol from about 5% to 30%. Synthetic polymers based on emulsion polymerisation, however, can be re-dispersed form about 30% up to 75%, depending on its specific composition.

The viscosity of the water-based dispersion depends on the type of powder adhesive, the amount of water and foam incorporated, but also from the particle size of the redispersed powder adhesive, which is influenced by the amount of shear applied to the system upon mixing. Furthermore, the temperature of the adhesive has also an influence on the viscosity. By optimising the various parameters individually for each single application, the required product viscosities can be obtained, which are essential for applying the water-based adhesive. Viscosities can e.g. be expressed as Brookfield viscosity measured at 23°C and at 20 rpm and preferably range from about 10 to 250'000 mPas, more preferably from about 100 to 100'000 mPas, most preferably from about 250 to 50'000 mPas and in particular from about 500 to 10'000 mPas.

The re-dispersed powder adhesives are preferably having low levels of Volatile Organic Compounds (VOC), thus being environmentally friendly. VOC's have a boiling point at ambient pressure of 250°C, thus most plasticizer, defoamer, as well residual monomers of the synthetic polymers contribute to it. In a preferred embodiment, the VOC-levels are below 1000 ppm, preferably below 500 pm, most preferably below 250 ppm and in particular below 100 ppm.

The redispersed powder adhesive formulations of the invention may be used to bond one substrate to a second similar or different substrate. Preferred are porous substrates including paper and wood. As used herein "paper" means both paper and paperboard products, both single- and multi-ply (e.g., paper laminates, corrugated boards, solid fibers) sheets made from without limitation, Kraft paper, paper made from recycled fibers and the like. The term "wood" is meant to include wood composites and particle board and encompass chipboard, particleboard, medium density fibreboard, high density fibreboard, oriented strand board, hardboard, hardwood plywood, veneer core plywood, isocyanate or phenolic impregnated strawboard, and wood composites made from woodfiber and polymers, such as recycled polyethylene.

Substrates may be bonded together by a process wherein the adhesive composition is applied to at least a first substrate, a second substrate is brought in contact with the adhesive composition applied to the first substrate, and the applied adhesive is subjected to conditions which will allow the adhesive composition to form a set bond, such conditions including air, heat and/or pressure.

The water based adhesives formed by the inventive process can be applied in conventional manner on a greater number of applications, such as those requiring increased bonding speed, and to make their use in paper converting applications, in particular tubes and core windings, sleeves manufacturing, litho and solid board lamination, honey comb, bag handles, bags & sacks, envelopes, edge banding, file manufacturing and book binding, such as spine glue, primers and casing-in, stamps and remoistenable coatings, packaging applications, in particular as sift proofing, composite cans and labelling, bottle labelling, tissue & towel, glued lap, folding carton, corrugating, tobacco applications, in particular as tipping, side seam, filter making and packaging and in medical and electronic applications.

Mixing procedures: While in research and development laboratories batch processes are often preferred, micro-batch or continuous processes are preferred in industry. It was found that for development purposes, there is a good correlation between a labbatch process and the micro-batch process, which are both described below. The labused 10 minutes re-dispersion time using a dissolver disc with a diameter of 90 mm and 4 holes cut into the main disc correlate well with the industrial-used 2 minutes redispersion time at the same stir speed, using one dissolver and two paddle stirrers with a ratio of the diameter of the mixer blades to the diameter of the mixing chamber of 0.70 and a ratio of the energy of mixing to the volume of the mixing chamber at 600 rpm, 50% filling volume and a Brookfield viscosity (23°C/20 RPM) after mixing of 2500 mPas is 0.19 Ampere/ litre.

This process leads to a simple and a cost efficient way to make permanently fresh adhesive, which can, but must not, be consumed immediately, without the need of having big storage containers filled with adhesives, which can deteriorate over time. By varying the water/ adhesive ratio, water based adhesives with different solids and viscosities and thus different properties can be obtained from the same raw material. Since it was found that a gas or a gas mixture, preferably air, can easily be incorporated during the mixing stage without having the need for expensive gas lines, an even bigger variety of products can be made by choosing the ratios of the three components powder adhesive, water and air in a way that the obtained product fulfils the needs required by the application. This can lead to more efficient adhesive grades, where less adhesive applied (calculated on solids) gives the same bond strength as the control.

The mixing conditions, such as energy applied during the mixing, further influences the final properties of the generated water based adhesive, and despite high shear forces applied, the powder particles do not necessarily re-disperse immediately to the particle size of the material before drying. Therefore, one can vary the particle size according to the application requirements, which is a benefit in many applications such as paper converting, since coarser particles reduce the penetration of the adhesive, making them more effective. Therefore, one can make on site from just one purchased raw material (powder adhesive), many different adhesive grades with different solids, viscosities, densities and particle sizes to satisfy most - if not all - customer needs for water based adhesives. This reduces the supply chain complexity significantly, since less adhesive grades have to be ordered and stored. Furthermore, the fact that powder adhesives can be also re-dispersed to water based adhesives having higher solids than their traditional liquid counterparts, which gives the possibility to use less adhesive on the substrate. This leads to increased set speed, enabling the machines to run faster. Using the inventive process, in many paper & converting applications the coat weight of the substrate can additionally be reduced by 15% or more without loss in performance of the produced product. Therefore, lighter substrates can be used without making compromises in product performance. This leads to lower substrates cost. Since powders are freeze thaw stable and are much less subject to bacterial attack, the powder adhesive can be biocide-free, and still have a long shelf life, e.g. 6 months or longer. When it has additionally low VOC levels, very environmentally friendly products are obtained, which are well ahead of regulations.

This invention can be illustrated by the following non-limiting examples.

### Example 1 (Comparisons of set speeds)

The water re-dispersible powder adhesives were re-dispersed in the lab using a batch process. The correct quantities of water and powder are weighed into different containers. The water is stirred in the mixer using the 90mm dissolver disc at the required speed, but as low to not allow the water to be thrown out of the container. The powder is poured in as quickly as possible and then the unit speed is increased to the desired level. The material is left mixing for 10minutes.

Two pieces of card with each a weight of 275 +/- 3 g/m² are bonded together at controlled temperature of 23°C at time zero using a controlled amount of adhesive (applied using a metered K-bar). The substrates are slowly pulled apart. The time between the start of fibre tear and complete substrate failure is quoted as the set speed. For industrial applications it is beneficial to have a fast set speed, allowing faster machine speed and improved machine efficiency.

**Table 1: Set speed of re-dispersed powder adhesives at different solids, compared to controls**

| Adhesive type | Type of example | Paper [g/m²] | Solids [%] | Coating thickness wet [µm] | Set speed [sec] |
|---|---|---|---|---|---|
| Powder A ^{a)} | Synthetic Powder Adhesive, inventive | 80 | 57 (2800mPas) | 36 | 14 |
| | | 80 | 47 (550mPas) | 36 | 19 |
| | | 80 | 39 (118mPas) | 36 | 26 |
| Powder B ^{b)} | Mixture of Synthetic and Natural Powder Adhesive, inventive | 80 | 46 (3430mPas) | 36 | 16 |
| | | 80 | 41 (700mPas) | 36 | 15 |
| Super-lok 421 ^{c)} | Synthetic liquid Adhesive, comparison | 80 | 47 (2660mPas) | 36 | 11 |
| Super-lok 7205 ^{d)} | Synthetic liquid Adhesive, comparison | 80 | 39 (2900mPas) | 36 | 13 |

| | | | | | |
|---|---|---|---|---|---|
| a) Powder A is a synthetic powder adhesive, based on an emulsion polymerised, Polyvinyl alcohol stabilised Ethylene-Vinyl acetate Copolymer (EVA), which was spray dried. The ethylene content is 10%, the ash content is below 1.5%, the Minimum Film Forming Temperature (MFFT) is +3°C. The product is plasticiser-free, freeze-thaw stable, has a storage time of more than 12 months, a VOC level of 150 ppm and the biocide level is low. b) Powder B is a mixture of a synthetic powder adhesive, based on a non-plasticised, emulsion polymerised, Polyvinyl alcohol stabilised Vinyl acetate Homopolymer, which was spray dried, and a Polysaccharide (Dextrine). The ash content is below 1% and the Minimum Film Forming Temperature (MFFT) is +18°C, The product is plasticiser-free, freeze-thaw stable, has a storage time of more than 12 months, a VOC level of 200 ppm and is free of biocide. c) Super-lok 421 is commercially available from National Starch & Chemical. It is a plasticised water based polyvinyl acetate adhesive typically used in paper converting and core winding applications. d) Super-lok 7205 is commercially available from National Starch & Chemical. It is a non-plasticised water based polyvinyl acetate adhesive typically used in core winding applications. | | | | | |

### Example 2 (Influence of re-dispersion conditions on viscosity, density and set speed)

The lab-batch process was used described above, using the mixing procedure of example 1. The viscosities are measured immediately after re-dispersion on a Brookfield viscometer. The measuring conditions (spindle/ speed/ temperature) are given in the table below. The density is measured in a standard density cup for 100cm3 of material. The empty cup and lid are weighed and the balance tarred. The cup is filled and the lid placed on top. The lid has a tiny hole in the centre - this allows any excess material to be removed and also can be used as an indication as to the fullness of the cup. Any excess material was wiped away and the cup, lid and contents then reweighed. The results are given in g/cm3. The set speed is measured as described in Example 1.

**Table 2: Product A. an emulsion polymerised Ethylene-Vinyl acetate Copolymer ^{e)}.**

| Solids (%) | Stirrer Speed (rpm) | Viscosity (mPas) | Viscosity conditions (spindle/ rpm/ T °C) | Density (g/cm³) | Set speed (sec) |
|---|---|---|---|---|---|
| 45 | 500 | 370 | 2/20/23 | 1.021 | 21 |
| | 1000 | 259 | 2/20/23 | 0.983 | 22 |
| | 1500 | 647 | 2/20/23 | 0.614 | 24 |
| 50 | 500 | 610 | 3/20/23 | 0.671 | 16 |
| | 1000 | 1180 | 3/20/23 | 0.579 | 15 |
| | 1500 | 1270 | 3/20/23 | 0.568 | 16 |
| 55 | 500 | 1680 | 3/20/23 | 0.723 | 16 |
| | 1000 | 1880 | 3/20/23 | 0.696 | 17 |
| 60 | 500 | 4410 | 4/20/23 | 0.776 | 13 |
| | 1000 | 3280 | 3/20/23 | 0.833 | 14 |
| 65 | 500 | 9580 | 5/20/23 | 0.944 | 9 |

| | | | | | |
|---|---|---|---|---|---|
| e) For product description see Table 1. | | | | | |

**Table 3: Product C, an emulsion polymerised Ethylene-Vinyl acetate Copolymer ^{f)}.**

| Solids (%) | Stirrer Speed (rpm) | Viscosity (mPas) | Viscosity conditions (spindle/ rpm/ T °C) | Density (g/cm³) | Set speed (sec) |
|---|---|---|---|---|---|
| 45 | 500 | 972 | 2/20/21 | 0.89 | 21 |
| | 1000 | 1590 | 3/20/25 | 0.67 | 22 |
| | 1500 | 1948 | 3/20/30 | 0.58 | 24 |
| | 2000 | 1820 | 3/20/39 | 0.84 | 16 |
| 50 | 500 | 3040 | 3/20/21 | 0.89 | 17 |
| | 1000 | 3130 | 3/20/26 | 0.76 | 17 |
| | 1500 | 3030 | 3/20/32 | 0.74 | 17 |
| | 2000 | 1750 | 3/20/39 | 0.84 | 16 |
| 55 | 500 | 7580 | 4/20/25 | 0.92 | 14 |
| | 1000 | 6100 | 4/20/32 | 0.94 | 14 |
| | 1500 | 4720 | 4/20/41 | 0.92 | 14 |
| | 2000 | 4270 | 4/20/45 | 0.95 | 14 |
| 60 | 500 | 24400 | 6/20/29 | 1.01 | 11 |
| | 1000 | 21100 | 6/20/41 | 1.01 | 12 |

| Comparisons (Synthetic liquid Adhesives): | | | | | |
|---|---|---|---|---|---|
| National 233-3005 ^{g)} | N/A | 180 | 1/20/23 | 1.07 | 20 |
| National 132-234A ^{h)} | N/A | 5400 | 4/20/23 | 1.08 | 17 |

| | | | | | |
|---|---|---|---|---|---|
| f) Powder C is a synthetic powder adhesive, based on an emulsion polymerised, Polyvinyl alcohol stabilised Ethylene-Vinyl acetate Copolymer (EVA), which was spray dried. The ethylene content is 10%, the ash content is below 1.5% and the Minimum Film Forming Temperature (MFFT) is +2°C. The product is plasticiser-free, freeze-thaw stable, has a storage time of at least 6 months, a VOC level of 500 ppm and the biocide level is low. e) National 233-3005 is commercially available from National Starch & Chemical. It is a non-plasticised water based Ethylene-Vinyl acetate Copolymer (EVA) adhesive typically used in side seam tobacco applications. The specific sample was at 47.8% solids. f) National 132-234A is commercially available from National Starch & Chemical. It is a non-plasticised water based Ethylene-Vinyl acetate Copolymer (EVA) adhesive typically used in tipping tobacco applications. The specific sample was at 45.1 % solids. | | | | | |

The results clearly indicate that processing one single raw material by different redispersion conditions leads to various viscosities, densities (indicates the amount of air introduced) and set speeds. Thus, they can be adjusted easily according to the application requirements.

### Example 3 (Powder adhesives for core winding for tissue rolls (kitchen towel))

### Example 3a (EVA powder adhesive on 215 g/m² on 175 g/m² core board)

Powder A (for product description see table 1) was dispersed at 57% solids, with a dispersing unit operating with a micro-batch process, using a set of one dissolver disc and two paddles, with a ratio of the diameter of the mixer blades to the diameter of the mixing chamber of 0.70 and a ratio of the energy of mixing to the volume of the mixing chamber at 600 rpm, 50% filling volume and a Brookfield viscosity (23°C/20 RPM) after mixing of 2500 mPas is 0.19 Ampere/ litre. The mixing speed was 600 rpm during two minutes leading to a final density of 0.81 g/cm³ and a viscosity of 2800 mPas (measured at 20 rpm and 23°C), the re-dispersed adhesive filling a Perini core winder made of a 40 litre tank, a roller in the bath with a scraper on its back to regulate film on roller, and another scraper 20 cm away from the roller removing excess of adhesive from the coated 215 g/m² core board. The 215 g/m² core board was then wound onto a second core board of 175 g/m², on a metal spindle forming a tube of 50 mm in diameter, that was cut at 3500 mm length and introduced into a Perini winding machine to wind 200 meter of 2 plys kitchen towels tissue on it at speed 41 logs/min. Overall production speed was up to 25 logs/min (90 meter/min), regular speed being 14 to 23 (50 to 80 meter/min respectively).

The setting speed was 23 sec vs. 35 sec of Super-lok 421 and measure of adhesive consumption demonstrated an average coating of 9.0 grams/core (=19 g/m²), when standard liquid typically uses 17 grams/core (= 35 g/m²). Cores were found stronger by 6% in horizontal crush resistance than with Super-lok 421, a commercial Polyvinyl acetate liquid adhesive.

The dispersing unit was running over a period of 11 weeks in a stop-and-go mode for 24 hrs per day and 5 days a week. The total mixing time was 660 minutes, which was sufficient to produce enough adhesive on a constant quality to serve the demand.

### Example 3b (EVA powder adhesive on 215 g/m² on 175 g/m² core board)

The same re-dispersion experiment with Powder A, as described in example 3a, has been reproduced and the obtained water based adhesive was applied on core board weights of 215 g/m² + 135 g/m², 180 g/m² + 180 g/m², and finally with 150 g/m² + 150 g/m² and speed up to 48 logs per minute (130 m/min) on various Perini and PCMC machines from 1860 mm to 2700 mm wide size. Loadings of wet re-dispersed powdered adhesive ranged from 2,5 to 2,8 grams per linear meter compared with 3,9 to 5,0 grams of standard wet liquid adhesive. Even the lower grammage cores showed the same behaviour during the tissue winding and log cutting process.
This demonstrate the improved technical performance of adhesive produced with the inventive process, which can lead to significant cost savings in core board production due to reduced adhesive consumption as well as lighter board weight required.

### Example 3c (VA powder adhesive on 200 g/m² on 240 g/m² core board)

Powder B (for product description see table 1) was dispersed at 46% solids, a viscosity of 2500 mPas and a density of 0,78 g/cm³, using the same dispersing unit as in example 3a at a mixing speed of 600 rpm for two minutes, the re-dispersed adhesive filling a Perini core winder made of a 40 litre tank, a roller in the bath with a scraper on its back to regulate film on roller, and another scraper 20 cm away from the roller removing excess of adhesive from the coated 200 g/m² core board. The 200 g/m² core board was then wound onto a second core board of 240 g/m², on a metal spindle forming a tube of 50 mm in diameter, that was cut at 2600 mm length and introduced into a Perini winding machine to wind 200 meter of 2 plys kitchen towels logs on it at speed up to 35 logs/min. Overall production speed was up to 42 logs/min (110 meter/min), regular speed being 20 to 35 (50 to 90 meter/min respectively). The averaged wet adhesive consumption was 7.0 grams per core, while the reference liquid polyvinyl acetate adhesive at 37% solids and a viscosity of about 5000 mPas requires 11 grams per core. The adhesive obtained using the inventive process was faster setting and the cores were stronger compared to the reference materials.

### Example 4 (Powder adhesives for honeycomb - network construction)

Powder A (for product description see table 1) was dispersed at 56% solids, using the same dispersing unit as described in example 3a, with a mixing speed at 1200 rpm for two minutes, resulting in an adhesive with a viscosity of 2000 mPas (at 20 rpm and 23°C and a density of 0,83 g/cm³), the adhesive filling a home made machine for network construction, handling two bath of re-dispersed adhesive. Coating system was metal discs fixed onto a stainless steel roller applying 26 lines of re-dispersed adhesive onto a 230 g/m² line of paper. Blocks of network were constituted of 190 sheets of paper bound together representing 2,2 cubic meter. Overall production speed was 37 meter/min, and it was found that adhesion was excellent (paper cohesion failure rather than cohesion or adhesion failure of adhesive). This was a 25% mileage improvement against the reference starch adhesive, dispersed at 26% solids, which was made up using a conventional batch process. It was observed that the material made using the inventive process showed a reduce moisture in the blocks by 10% after 24 hours. This is attributed to the lower amounts of adhesive used in combination of the lower water content of the adhesive. This significant moisture reduction allows much faster trimming and product shipment to the customer.

### Example 5 (Powder adhesives for industrial sacks - bottom application)

Powder A (for product description see table 1) was dispersed at 55% solids, using the same dispersing unit as described in example 3a, with a mixing speed at 1200 rpm for two minutes, resulting in an adhesive with a viscosity of 2000 mPas (at 20 rpm and 23°C) and a density of 0,80 g/cm³. The re-dispersed adhesive was directly filling 6 'doctor chambers' reservoirs coating one rubber roller each, on a Windmoller & Holscher 2379 bottoming machine. During run, re-dispersed adhesive was applied onto the sacks bottoms, at speed up to 285 pieces a minute. Good adhesion giving fibre tears was obtained within about one minute, allowing drying times of less than 24 hrs. However, the reference adhesive, which is a starch based product at 26% solids made by a batch process, requires 15 or more minutes until fibre tear is observed. Additionally, the drying times are 3 or more days. Again, this is attributed to the lower overall adhesive consumption in combination with the reduced water content of the adhesive Itself.

### Example 6 (Powder adhesives for cigarette tipping paper)

Powder C (for product description see table 3), a powder adhesive based on an emulsion polymerised Ethylene-Vinyl acetate Copolymer was dispersed at 52% solids, using the same dispersing unit as described in example 3a, with a mixing speed at 1500 rpm for two minutes. The sample was allowed to degas, resulting in an adhesive with a viscosity of 2280 mPas (at 20 rpm and 23°C) and a density of 1.07 g/cm³. The adhesive was filled in 30 kg plastic pails and moved to the cigarette making machine Mollins Mark 9-5. Run lasted 30 minutes, adhesive coating an engraved roller in a bath, and then transferring onto the tipping paper, at speed up to 3500 cigarettes/minutes. Comparison to a standard borated tipping adhesive (Super-lok 10 at 50% solids) was made, check consisting in "Turn back, Spiraled, Tab, Not stuck, Flagging, Discoloration, and Degradation over time, and it was found trial cigarettes performed better than standard (see table 4), particularly for flagging. No discoloration or degradation over time has been noticed. A Taste & Odour test has been carried out revealing no change in taste or variation in odour for the trial cigarettes against the standard. It was particularly surprising, that the non-borated adhesive made by the inventive process could compete with, and even surpass the borated commercial adhesive.

**Table 4: Type and number of failures of cigarette tipping adhesive using the inventive process against control.**

| Parameter to check | Powder, inventive process (Powder C; non-borated adhesive) | Liquid, conventional process (Super-lok 10, borated adhesive) |
|---|---|---|
| Turn Back | 0 | 0 |
| Flagging | 57 | 126 |
| Not Stuck | 0 | 0 |
| TAB | 22 | 7 |
| Spiralled | 13 | 23 |
| **No of total failures** | **92** | **154** |

### Example 7 (Powder adhesives for cigarette side seam with different cigarette papers)

Powder C was dispersed at 45% solids, using the same dispersing unit as described in example 3a, with a mixing speed at 1500 rpm for two minutes. The sample was allowed to degas, resulting in an adhesive with a viscosity of 519 mPas (at 20 rpm and 23°C) and a density of 1.06 g/cm³. The adhesive was filled in 30 kg pail and moved to a cigarette making machine Hauni Max S. Run lasted 171 minutes, on five different cigarette papers for sideseam, at speed 3500 cigarette/minute without noticing any trouble during production. Coating system being a nozzle applicator filled by gravity from a 10 kg pot. The same tests as for tipping were made, with same positive results and comments, even when compared to borated liquid adhesive (e.g. Super-lok 10 at 50% solids).

## Claims

1. Process to generate a water based adhesive by mixing a re-dispersible powder adhesive and water, optionally together with other components, **characterized by** mixing a re-dispersible powder adhesive, water and optionally other components such that the final water based adhesive contains a re-dispersed powder adhesive in an amount of 0.5% to 80% by weight and has a Brookfield viscosity (23°C/20 RPM) from 10 to 250'000 mPas, wherein
- the mixing is carried out as a micro-batch or a continuous process with a volume of the mixing chamber of 0.001 to 200 litres and with a mixing time of 0.01 to 500 seconds, and
- the ratio of the diameter of at least one mixer blade to the diameter of the mixing chamber is 0.50 to 0.99.

2. Process according to at least one of claims 1, **characterized in, that** one micro-batch cycle comprises of the following steps:
a) charging the mixing chamber with water, re-dispersible powder adhesive and optionally other components,
b) mixing the additions to obtain full or partial re-dispersion of the powder adhesive,
c) optionally further mixing and introducing a gas,
d) discharging the obtained water based adhesive,
wherein the steps a) - d) can be carried out consecutive and/or simultaneously.

3. Process according to claim 1, **characterized in, that** the continuous process is carried out in a mixing chamber with a mixing device suitable for micro-batch processes and/ or in a tubular mixing chamber, in particular in a screw kneader and optionally introducing a gas.

4. Process according to claim 2, **characterized in, that** the cycle time of a micro-batch cycle, comprising the steps a) - d) is from 1 to 1000 seconds, in particular from 2 to 500 seconds, and the mixing time of step b) is from 0.1 to 250 seconds, in particular from 1 to 150 seconds.

5. Process according to at least one of claims 1 to 4 **characterized in, that** in the mixing chamber with rotating blades the ratio of the diameter of at least one mixer blade to the diameter of the mixing chamber is from 0.60 to 0.98, in particular from 0.70 to 0.97.

6. Process according to at least one of claims 1 to 5, **characterized in, that** the volume of the mixing chamber is from 0.01 to 100 litres, in particular from 0.05 to 50 litres.

7. Process according to at least one of claims 1 to 6, **characterized in, that** the ratio of the energy of mixing to the volume of the mixing chamber at 600 rpm, 50% filling volume and a Brookfield viscosity (23°C/20 RPM) after mixing of 2500 mPas is from 0.05 to 20 Ampere/ litre, in particular from 0.10 to 10 Ampere/ litre.

8. Process according to at least one of claims 1 to 7, **characterized in, that** the redispersible powder adhesive is a synthetic adhesive or a mixture of synthetic adhesives, in particular a homo- or copolymer of an emulsion- and/or solution-polymerisation, subsequently dried.

9. Process according to claim 8, **characterized in, that** the monomers building up the synthetic resin are selected from the group consisting of vinyl esters of C1- to C20-carboxylic acids, ethylene, vinylchloride, C1- to C20- alkyl esters of acrylic acid and methacrylic acid, acrylonitrile, (meth)acrylamide, styrene and styrene derivatives and/or butadiene.

10. Process according to at least one of claims 1 to 7, **characterized in, that** the redispersible powder adhesive is a natural adhesive, in particular a polysaccharide or a protein.

11. Process according to claim 10, **characterized in, that** the polysaccharide is cellulose, cold water soluble starch, dextrin and/or guar, in particular modified with alkyl-, hydroxyl- and/or alkyl succinic anhydride, and the protein is casein and/ or soya protein.

12. Process according to at least one of claims 1 to 11, **characterized in, that** the Brookfield viscosity (23°C/20 RPM) is from 100 to 100'000 mPas, in particular from 250 to 50'000 mPas.

13. Process according to at least one of claims 1 to 12, **characterized in, that** the final water based adhesive contains a re-dispersed powder adhesive in an amount of 1 % to 70% by weight, in particular of 2% to 60% by weight.

14. Process according to at least one of claims 1 to 13, **characterized in, that** during and/or after mixing a re-dispersible powder adhesive, water and optionally other components, a gas or gas mixture is introduced, obtaining a density (at 23°C) of the final water based adhesive from 0.010 to 1.20 g/cm3, in particular from 0.40 to 1.10 g/cm3.

15. Method according to claims 2 to 14, **characterized in, that** the gas is nitrogen, oxygen, helium, argon, carbon dioxide and/or air.

16. Process according to at least one of claims 1 to 15, **characterized in, that** the resulting water based adhesive is low in VOC, plasticizer free and/or the biocide level is low or zero.

17. Process according to claim 16, **characterized in, that** the resulting water based adhesive has VOC-levels of 0 to 500 ppm, in particular 0 to 250 ppm.

18. Process according to at least one of claims 1 to 17, **characterized in, that** other components, in particular plasticizer, defoamers, wetting agents, adhesion promoters, foam generators, hardeners, waxes, surfactants, rheology modifiers, fragrances, dyes, pigments, preservatives, UV-indicators, coalescing agents, humectants, tackifiers, boric acid or their salts, pH-adjusters and/ or buffers, organic and or inorganic fillers are included into the final water based adhesive, in particular in amounts ranging between 0,1 and 500% by weight and more particular between 0,2 and 250% by weight, based on the amount of the organic polymeric adhesive component of the water based adhesive.

## Patentansprüche

1. Verfahren zur Herstellung eines Klebers auf Wasserbasis durch Mischen eines redispergierbaren Pulverklebers und Wasser, gegebenenfalls zusammen mit anderen Komponenten, **gekennzeichnet durch** Mischen eines redispergierbaren Pulverklebers, Wasser und gegebenenfalls anderer Komponenten, sodass der endgültige Kleber auf Wasserbasis einen redispergierten Pulverkleber in einer Menge von 0,5 bis 80 Gew.-% enthält und eine Brookfield-Viskosität (23 °C/20 U/min) von 10 bis 250 000 mPas hat, wobei
- das Mischen als Mikrocharge oder als kontinuierliches Verfahren mit einem Volumen in der Mischkammer mit 0,001 bis 200 Liter und mit einer Mischzeit von 0,01 bis 500 Sekunden durchgeführt wird; und
- das Verhältnis des Durchmessers wenigstens eines Mischerblatts zu dem Durchmesser der Mischkammer 0,50 bis 0,99 ist.

2. Verfahren nach Anspruch 1, **dadurch gekennzeichnet, dass** ein Mikrochargenzyklus die folgenden Schritte umfasst:
a) Beschicken der Mischkammer mit Wasser, redispergierbarem Pulverkleber und gegebenenfalls anderen Komponenten,
b) Mischen der Zusätze, um eine vollständige oder partielle Redispersion des Pulverklebers zu erhalten,
c) gegebenenfalls weiteres Mischen und Einführen eines Gases,
d) Entnahme des erhaltenen Klebers auf Wasserbasis,
wobei die Schritte a) bis d) aufeinander folgend und/oder gleichzeitig durchgeführt werden können.

3. Verfahren nach Anspruch 1, **dadurch gekennzeichnet, dass** das kontinuierliche Verfahren in einer Mischkammer mit einer Mischvorrichtung, die für Mikrochargenverfahren geeignet ist, und/oder in einer Röhrenmischkammer, insbesondere in einem Schneckenkneter und gegebenenfalls unter Einführung eines Gases durchgeführt wird.

4. Verfahren nach Anspruch 2, **dadurch gekennzeichnet, dass** die Zykluszeit eines Mikrochargenzyklus, der die Schritte a) bis d) umfasst, 1 bis 1 000 Sekunden, insbesondere 2 bis 500 Sekunden, dauert, und die Mischzeit von Schritt b) 0,1 bis 250 Sekunden, insbesondere 1 bis 150 Sekunden, beträgt.

5. Verfahren nach wenigstens einem der Ansprüche 1 bis 4, **dadurch gekennzeichnet, dass** in der Mischkammer mit rotierenden Blättern das Verhältnis des Durchmessers wenigstens eines Mischerblatts zu dem Durchmesser der Mischkammer 0,60 bis 0,98, insbesondere 0,70 bis 0,97, ist.

6. Verfahren nach wenigstens einem der Ansprüche 1 bis 5, **dadurch gekennzeichnet, dass** das Volumen der Mischkammer 0,01 bis 100 Liter, insbesondere 0,05 bis 50 Liter, beträgt.

7. Verfahren nach wenigstens einem der Ansprüche 1 bis 6, **dadurch gekennzeichnet, dass** das Verhältnis der Mischenergie zu dem Volumen der Mischkammer bei 600 U/min 50 % Füllvolumen und bei einer Brookfield-Viskosität (23 °C/ 20 U/min) nach dem Mischen von 2 500 mPas 0,05 bis 20 Ampere/Liter, insbesondere von 0,10 bis 10 Ampere/Liter, ist.

8. Verfahren nach wenigstens einem der Ansprüche 1 bis 7, **dadurch gekennzeichnet, dass** der redispergierbare Pulverkleber ein synthetischer Kleber oder ein Gemisch synthetischer Kleber, insbesondere ein Homo- oder Copolymer einer Emulsions- und/oder Lösungspolymerisation, das anschließend getrocknet wurde, ist.

9. Verfahren nach Anspruch 8, **dadurch gekennzeichnet, dass** die Monomeren, die das synthetische Harz bilden, ausgewählt werden aus der Gruppe, bestehend aus Vinylestern von C1- bis C20-Carbonsäuren, Ethylen, Vinylchlorid, C1- bis C20-Alkylestern von Acrylsäure und Methacrylsäure, Acrylnitril, (Meth)acrylamid, Styrol und Styrol-Derivaten und/oder Butadien.

10. Verfahren nach wenigstens einem der Ansprüche 1 bis 7, **dadurch gekennzeichnet, dass** der redispergierbare Pulverkleber ein natürlicher Kleber, insbesondere ein Polysaccharid oder ein Protein, ist.

11. Verfahren nach Anspruch 10, **dadurch gekennzeichnet, dass** das Polysaccharid Cellulose, in kaltem Wasser lösliche Stärke, Dextrin und/oder Guar, insbesondere modifiziert mit Alkyl-, Hydroxyl- und/oder Alkylbernsteinsäureanhydrid, ist, und das Protein Casein und/oder Sojaprotein ist.

12. Verfahren nach wenigstens einem der Ansprüche 1 bis 11, **dadurch gekennzeichnet, dass** die Brookfield-Viskosität (23 °C/20 U/min) 100 bis 100 000 mPas, insbesondere 250 bis 50 000 mPas, ist.

13. Verfahren nach wenigstens einem der Ansprüche 1 bis 12, **dadurch gekennzeichnet, dass** der endgültige Kleber auf Wasserbasis einen redispergierten Pulverkleber in einer Menge von 1 Gew.-% bis 70 Gew.-%, insbesondere von 2 Gew.-% bis 60 Gew.-%, enthält.

14. Verfahren nach wenigstens einem der Ansprüche 1 bis 13, **dadurch gekennzeichnet, dass** während und/oder nach dem Mischen eines redispergierbaren Pulverklebers, von Wasser und gegebenenfalls anderen Komponenten, ein Gas oder ein Gasgemisch eingeführt wird, wodurch eine Dichte (bei 23 °C) des endgültigen Klebers auf Wasserbasis von 0,010 bis 1,20 g/cm³, insbesondere von 0,40 bis 1,10 g/cm³, erhalten wird.

15. Verfahren nach den Ansprüchen 2 bis 14, **dadurch gekennzeichnet, dass** das Gas Stickstoff, Sauerstoff, Helium, Argon, Kohlendioxid und/oder Luft ist.

16. Verfahren nach wenigstens einem der Ansprüche 1 bis 15, **dadurch gekennzeichnet, dass** der resultierende Kleber auf Wasserbasis einen geringen VOC aufweist, frei von Weichmacher ist und/oder die Biocidkonzentration gering oder Null ist.

17. Verfahren nach Anspruch 16, **dadurch gekennzeichnet, dass** der resultierende Kleber auf Wasserbasis VOC-Konzentrationen von 0 bis 500 ppm, insbesondere von 0 bis 250 ppm, hat.

18. Verfahren nach wenigstens einem der Ansprüche 1 bis 17, **dadurch gekennzeichnet, dass** andere Komponenten, insbesondere Weichmacher, Entschäumer, Netzmittel, Adhäsionsförderungsmittel, Schaumbildner, Härter, Wachse, Tenside, Modifizierungsmittel für die Rheologie, Duftstoffe, Farbstoffe, Pigmente, Konservierungsmittel, UV-Indikatoren, Koaleszenzmittel, Feuchthaltemittel, Klebrigmacher, Borsäure oder ihre Salze, pH-Einstellungsmittel und/oder Puffer, organische und/oder anorganische Füllstoffe in dem endgültigen Kleber auf Wasserbasis enthalten sind, insbesondere in Mengen im Bereich zwischen 0,1 bis 500 Gew.-% und bevorzugter zwischen 0,2 und 250 Gew.-%, bezogen auf die Menge der organischen polymeren Kleberkomponente des Klebers auf Wasserbasis.

## Revendications

1. Procédé de production d'un adhésif aqueux en mélangeant un adhésif en poudre redispersible et de l'eau, éventuellement conjointement avec d'autres composants, **caractérisé par** le mélange d'un adhésif en poudre redispersible, d'eau et éventuellement d'autres composants de sorte que l'adhésif aqueux final contient un adhésif en poudre redispersée en une quantité de 0,5 à 80 % en poids et a une viscosité Brookfield (23 °C/20 T/min) de 10 à 250 000 mPa, dans lequel
- le mélange est effectué selon un procédé discontinu ou un procédé continu avec un volume de la chambre de mélange de 0,001 à 200 litres et avec une durée de mélange de 0,01 à 500 secondes, et
- le rapport du diamètre d'au moins une lame de mélangeur au diamètre de la chambre de mélange va de 0,50 à 0,99.

2. Procédé selon au moins l'une des revendications 1, **caractérisé en ce qu'**un cycle discontinu comprend les étapes suivantes :
a) le chargement de la chambre de mélange avec de l'eau, l'adhésif en poudre redispersible et éventuellement d'autres composants,
b) le mélange des additions pour obtenir une redispersion complète ou partielle de l'adhésif en poudre,
c) éventuellement le mélange supplémentaire et l'introduction d'un gaz,
d) l'évacuation de l'adhésif aqueux obtenu,
dans lequel les étapes a) à d) peuvent être effectuées de manière consécutive et/ou simultanée.

3. Procédé selon la revendication 1, **caractérisé en ce que** le procédé continu est effectué dans une chambre de mélange avec un dispositif de mélange approprié aux procédés discontinus et/ou dans une chambre de mélange tubulaire, en particulier dans un malaxeur à vis et éventuellement **en ce qu'**un gaz est introduit.

4. Procédé selon la revendication 2, **caractérisé en ce que** la durée de cycle d'un cycle discontinu, comprenant les étapes a) à d) va d'environ 1 à 1000 secondes, en particulier de 2 à 500 secondes, et la durée de mélange de l'étape b) va de 0,1 à 250 secondes, en particulier de 1 à 150 secondes.

5. Procédé selon au moins l'une des revendications 1 à 4, **caractérisé en ce que** dans la chambre de mélange équipée de lames rotatives, le rapport du diamètre d'au moins une lame de mélangeur au diamètre de la chambre de mélange va de 0,60 à 0,98, en particulier de 0,70 à 0,97.

6. Procédé selon au moins l'une des revendications 1 à 5, **caractérisé en ce que** le volume de la chambre de mélange va de 0,01 à 100 litres, en particulier de 0,05 à 50 litres.

7. Procédé selon au moins l'une des revendications 1 à 6, **caractérisé en ce que** le rapport de l'énergie de mélange au volume de la chambre de mélange à 600 T/min, 50 % de volume de remplissage et une viscosité Brookfield (23 °C/20 T/min) après mélange de 2500 mPa va de 0,05 à 20 Ampères/litre, en particulier de 0,10 à 10 Ampères/litre.

8. Procédé selon au moins l'une des revendications 1 à 7, **caractérisé en ce que** l'adhésif en poudre redispersible est un adhésif synthétique ou un mélange d'adhésifs synthétiques, en particulier un homo- ou copolymère d'une polymérisation en émulsion et/ou solution, subséquemment séché.

9. Procédé selon la revendication 8, **caractérisé en ce que** les monomères constituant la résine synthétique sont choisis dans le groupe constitué par les esters vinyliques d'acides carboxyliques en C1 à C20, l'éthylène, le chlorure de vinyle, les esters alkyliques en C1 à C20 d'acide acrylique et d'acide méthacrylique, l'acrylonitrile, le (méth)acrylamide, le styrène et les dérivés du styrène et/ou le butadiène.

10. Procédé selon au moins l'une des revendications 1 à 7, **caractérisé en ce que** l'adhésif en poudre redispersible est un adhésif naturel, en particulier un polysaccharide ou une protéine.

11. Procédé selon la revendication 10, **caractérisé en ce que** le polysaccharide est de la cellulose, de l'amidon soluble dans l'eau froide, de la dextrine et/ou du guar, en particulier modifié avec de l'anhydride alkyl-, hydroxyl- et/ou alkylsuccinique, et la protéine est la caséine et/ou la protéine de soja.

12. Procédé selon au moins l'une des revendications 1 à 11, **caractérisé en ce que** la viscosité Brookfield (23 °C/20 T/min) va de 100 à 100 000 mPa, en particulier de 250 à 50 000 mPa.

13. Procédé selon au moins l'une des revendications 1 à 12, **caractérisé en ce que** l'adhésif aqueux final contient un adhésif en poudre redispersée en une quantité de 1 % à 70 % en poids, en particulier de 2 % à 60 % en poids.

14. Procédé selon au moins l'une des revendications 1 à 13, **caractérisé en ce que** pendant et/ou après le mélange d'un adhésif en poudre redispersible, d'eau et éventuellement d'autres composants, un gaz ou un mélange gazeux est introduit, en obtenant une densité (à 23 °C) de l'adhésif aqueux final de 0,010 à 1,20 g/cm³, en particulier de 0,40 à 1,10 g/cm³.

15. Procédé selon les revendications 2 à 14, **caractérisé en ce que** le gaz est l'azote, l'oxygène, l'hélium, l'argon, le dioxyde de carbone et/ou l'air.

16. Procédé selon au moins l'une des revendications 1 à 15, **caractérisé en ce que** l'adhésif aqueux obtenu est pauvre en COV, dépourvu de plastifiant et/ou le niveau de biocides est faible ou nul.

17. Procédé selon la revendication 16, **caractérisé en ce que** l'adhésif aqueux obtenu a des niveaux de COV de 0 à 500 ppm, en particulier de 0 à 250 ppm.

18. Procédé selon au moins l'une des revendications 1 à 17, **caractérisé en ce que** d'autres composants, en particulier des plastifiants, des anti-mousses, des agents mouillants, des promoteurs d'adhésion, des générateurs de mousse, des durcisseurs, des cires, des agents tensioactifs, des modificateurs de rhéologie, des parfums, des colorants, des pigments, des conservateurs, des indicateurs d'UV, des agents de coalescence, des humidifiants, des agents poisseux, de l'acide borique ou leurs sels, des ajusteurs de pH et/ou des tampons, des charges organiques ou inorganiques, sont inclus dans l'adhésif aqueux final, en particulier en des quantités allant de 0,1 à 500 % en poids et plus particulièrement de 0,2 à 250 % en poids, sur la base de la quantité du composant adhésif polymère organique de l'adhésif aqueux.
